# EUROPEAN PATENT SPECIFICATION

(11) **EP 3 903 066 B1**
(45) Date of publication and mention of the grant of the patent: **25.06.2025**
(21) Application number: 19737453.1
(22) Date of filing: 25.06.2019
(51) Int. Cl.: G01C 21/20, B60W 30/16, H04W 4/029, H04W 4/02, G08G 1/00, G01C 21/34, G01C 21/26

(54) **NAVIGATION WITH DYNAMIC REGROUPING POINTS**
NAVIGATION MIT DYNAMISCHEN UMGRUPPIERUNGSPUNKTEN
NAVIGATION AVEC POINTS DE REGROUPEMENT DYNAMIQUE

(43) Date of publication of application: 03.11.2021
(73) Proprietor: Google LLC, Mountain View, CA 94043 (US)
(72) Inventor: SHARIFI, Matthew, 8002 Zürich (CH); KRACUN, Aleksandar, Mountain View, CA 94043 (US)
(74) Representative: Chettle, John Edward
(86) International application number: PCT/US2019/038997
(87) International publication number: WO 2020/263233

(56) References cited:
- EP-A1- 2 423 900
- EP-A2- 2 887 020
- US-A1- 2018 195 874
- US-B1- 9 141 112

## Description

### FIELD

The present disclosure relates generally to computer-based navigation. More particularly, the present disclosure relates to a navigational application that enables a joint positional tracking process for tracking multiple users and/or multiple vehicles.

### BACKGROUND

As computer technology has improved, the number and type of services that can be provided to users have increased dramatically. The services provided via computer technology includes navigation services. A navigation service can allow a user to navigate from a current position to a destination position. The user can submit a destination (e.g., an address) through an application associated with a navigation service. The navigation service can, using map data for a geographic area, generate a planned route to the destination. In some examples, the planned route includes one or more turn-by-turn navigation directions. The navigation service can also track the current position of a user and update the planned route based on the actual movement of the user.
EP2887020 describes a mobile unit and a method for supporting a common driving experience for drivers of a plurality of such mobile units. In particular, it relates to the establishment or maintenance of a predefined relationship between at least two mobile units. EP2423900 describes a method of tracking a lead mobile device which entails receiving tracking data that includes a current location for both the lead mobile device and at least one other mobile device that is also tracking the lead device. The method also entails displaying the current locations of the lead device and of the at least one other mobile device that is also receiving the tracking data.
US2018195874 describes that a first user of a smart phone or vehicle navigation system may invite a second user of a smart phone or vehicle navigation system to participate in a shared travel experience where the second user follows the first user. While on the shared trip, the first user is provided the location of the second user along with a route to a selected destination. The second user is provided the location of the first user, along with the route to the selected destination. The first user is able to identify points of interest on the route, which are then presented to the second user. A network is established that allows the first and second user to have a two-way conversation, and to synchronize the music that is listened to by the first user and the second user to simulate the experience of being together in the same vehicle.
US9141112 describes a system for forming and managing a caravan of vehicles. The system may include computing devices in a plurality of vehicles belonging to a caravan. The computing devices participating in the caravan may communicate various information to each other. This information may be used to generate and manage a route for the caravan. The system may also be used to select a leader and/or order of the caravan for a particular trip. During the trip, the system may monitor the caravan and analyze inputs from participants and vehicles. Further, the system may modify the route based on such inputs and distribute the modified route to participating computing devices so that the caravan may be maintained.

### SUMMARY

Aspects and advantages of embodiments of the present disclosure will be set forth in part in the following description, or can be learned from the description, or can be learned through practice of the embodiments. The invention to which this European patent relates is defined in the appended claims.

One example of the present disclosure is directed to a computer-implemented method as defined in appended independent claim 1.

Other examples of the present disclosure are directed to a non-transitory computer-readable medium as defined in appended independent claim 8 and to a server computing system as defined in appended independent claim 9.

These and other features and advantages of various examples of the present disclosure will become better understood with reference to the following description and appended claims. The accompanying drawings, which are incorporated in and constitute a part of this specification, illustrate examples of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
FIG. 1 depicts an example server-client system according to example embodiments of the present disclosure;
FIG. 2 depicts an example computer system according to example embodiments of the present disclosure;
FIG. 3 depicts an example block diagram for the execution of a prediction system according to example embodiments of the present disclosure;
FIGS. 4A-4C depict an example user interface according to example embodiments of the present disclosure; and
FIG. 5 depicts an example flow diagram for a method of group navigation according to example embodiments of the present disclosure.

### DETAILED DESCRIPTION

Reference now will be made in detail to embodiments of the present disclosure, one or more examples of which are illustrated in the drawings. Each example is provided by way of explanation of the present disclosure, not limitation of the present disclosure. In fact, it will be apparent to those skilled in the art that various modifications and variations can be made to the present disclosure without departing from the scope of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

Generally, the present disclosure is directed to enabling a joint positional tracking process within a navigation service. The joint positional tracking process can enable multiple users to share positional data with each other while navigating to a shared destination using the navigation service. The navigation service determines when one or more of the users included in a joint positional tracking session exceeds a threshold separation value from the other users and automatically generates route updates to bring the users back within the threshold separation value.

For example, a joint positional tracking session that includes two or more users can be initiated at a server computing system associated with a navigation service. Once the joint positional tracking session has been initiated, a plurality of computing devices, each computing device associated with a user participating in the joint positional tracking session (may also be referred to as a joint positional tracking process group), can periodically determine their current position and upload positional data representing that position to the server computing system.

The server computing system can transmit the received positional data to each computing device for display to one or more participating users. In this way, a user can view the current position of other users in the joint positional tracking session. Using the received positional data, the server computing system determines that a separation parameter associated with a first user (e.g., via the computing device associated with the user) has exceeded a predetermined distance threshold. In response, the server computing system generates route updates and transmits the route updates to the first user and a closest other user included in the joint positional tracking service session. The route updates include data that adds one or more extra regrouping waypoints to the current navigational route.
Adding an additional waypoint (e.g., a stopping point) can allow the users to regroup at a common stopping point before continuing their trip.

More particularly, the joint positional tracking process is enabled by a navigation service implemented on one or more server computing systems and one or more computing devices associated with individual users. In some examples, a computing device associated with a user can include a display. The display can be used by a navigation application installed on the computing device to display navigational information to the user. Navigational information can include, but is not limited to, a map of a geographic area, the position of the computing device in the geographic area, a route through the geographic area designated on the map, one or more navigational directions (e.g., turn-by-turn directions through the geographic area), and/or one or more points of interest within the geographic area.

When a user accepts an invitation to join a joint positional tracking session, the navigation application can begin displaying the positions of one or more other users included in the joint positional tracking session in the display associated with the computing device. **In** this way, a user can quickly and easily determine the current position of the other members of the joint positional tracking session within the geographic area and relative to themselves. **In** some examples, the positional information for other users can be received from a server computing system associated with the navigation service. **In** some examples, the positional information for other users can be received directly from computing devices associated with those users via a peer-to-peer communication protocol or other wireless communication protocol.

In some examples, a navigation application or navigation service can initiate a joint positional tracking session in response to a request from one or more users. For example, if two users plan to follow the same route to a common destination and want to travel together in a group or caravan, one of the users can access the navigation service through their respective computing devices and request that a joint positional tracking session be created for their trip. In response, the navigation service can generate a new joint positional tracking session that includes the two users. In some examples, a first user can request the joint positional tracking session be created and then send an invitation to one or more other users to join the joint positional tracking session.

In some examples, an invitation to join a joint positional tracking session can be displayed in a navigational application on a computing device of a user. Thus, an invitation can be sent from a server computing system associated with the navigation service to a specific user's computing device. The invitation can include data describing the planned destination for the joint positional tracking session, the identities of one or more users already included in the joint positional tracking session, an identifier for the specific joint positional tracking session, and a date and time indicator describing when the joint positional tracking session will begin. A user interface element can be created to display the invitation and relevant information to a user. The user can then join the joint positional tracking session by interacting with the user interface element (e.g., clicking or tapping on a "join" button).

Once a joint navigation tracking process session has been initiated, each user included in the joint navigation tracking process session can have an associated computing device that periodically determines their current position (e.g., using a GPS sensor or other method) and sends an update of that determined current position through a computing device to a server computing system associated with the navigation service. When a user's current position is updated, that updated position can be correspondingly updated in the positional data associated with the joint navigation tracking process session. As a result, each user participating in a given joint positional tracking session can also receive the updated positional information. In this way, users participating in a joint positional tracking session can view a current location for one or more other users. In some examples, a server computing system associated with a navigation service can create a new data structure in a database to represent the new joint position tracking process session.

In some examples, a joint navigation tracking process session can be generated automatically by a server computing system associated with a navigation service. For example, the navigation service may have access to user data for a plurality of users that access the navigation service. The navigation service can analyze the user data to generate predicted travel data for one or more users. For example, the navigation service can access the current position and heading data for a user. Based on the current position and heading of a user, the navigation service can estimate a likely destination for a user. Based on the current position and likely destination, the navigation service can generate predicted travel data that includes a predicted route for a user from the current position to the likely destination.

In another example the navigation service can access calendar information for one or more users. The calendar information for a user can include one or more scheduled appointments. The navigation service can access information concerning the location of each appointment and compare that to the user's current location. Predicted travel data can then be generated based on the time and location of the appointment and the likely route the user will take to arrive to the appointment at the given time. In some examples, the likely route may be based on past travel data for the user.

In some examples, the navigation service can analyze past movement data to identify one or more past trips the user has taken. Based on this analysis of user data, the navigation service can predict travel data for the user. For example, if a user routinely makes a particular trip, the navigation service can generate predicted travel data for a similar trip in the future. For example, if a particular user travels from New York City to a town in upstate New York on most Saturdays during a given time period, the navigation service may generate predicted travel data that represents a trip to upstate New York on the next Saturday.

Further to the descriptions above, a user may be provided with controls allowing the user to make an election as to both if and when systems, programs, or features described herein may enable collection and analysis of user information (e.g., information about a user's social network, a user's calendar data, a user's past movements, a user's preferences, or a user's current location), and if the user is sent content or communications from a server. Only if a user chooses to allow the analysis of such data may the above generation of predicted travel data be implemented. In addition, even if a user allows some data to be analyzed, it may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used or analyzed, and what information is provided to the user.

In some examples, predicted travel data can include an initial position (e.g., a starting place and time), a destination position (e.g., an ending place and time), and a route between the initial position and the destination position. The route can be a predicted travel route generated by the navigation service based on common travel patterns or a user's historical travel preferences. In some examples, once the navigation service has generated predicted travel data for a first user, the service can compare the predicted travel data with the predicted travel data of one or more other users. In some examples, the navigation service can compare a first user's predicted travel data with the predicted travel data of one or more users selected by the navigation service. The one or more selected users can be selected based on social network data for the first user. For example, the navigational service may only compare predicted travel data between users who are already known to be connected to each other through a social connection.

In some examples, a navigation service includes a server computing system that receives communications from one or more local computing devices. In some examples local computing devices can include one or more mobile computer devices including, but not limited to: smartphones, laptop computers, tablet computing devices, and stand-alone GPS systems. The navigation system can include a database of map data, the map data including information associating with one or more geographic areas, including buildings, roads, and other waypoints. When a user wishes to travel to a specific location, the user can access a navigation application associated with the navigation service. The user can submit a navigation request with a destination address. In response, the navigation service can generate a route from a current location to the destination address.

The navigation service can compare predicted travel data for a first user with the predicted travel data of a second user. As at least part of the comparison, the navigation service can generate a match score that represents the degree to which the time and destination of a first user's predicted travel data match the time and destination of the second user's predicted travel data. If the match score between the first user's predicted travel data and the second user's predicted travel data exceeds a threshold value, the navigation service can determine that the first user's predicted travel data have an association with the second user's predicted travel data. For example, if two user's predicted travel times have a high match score, the navigation service can predict the two users are traveling on the same path to the same destination at approximately the same time.

Once the navigation service has determined that the travel data of two users has an association, the navigation service can initiate a potential joint positional tracking session. As part of initiating a potential joint positional tracking session, the navigation service can transmit an invitation to at least a first user and a second user. The invitation includes an identifier for the potential joint positional tracking session and an option for the user to join the potential joint positional tracking session. In response, a determination that two or more users have selected the option to join the joint positional tracking session, the navigation service can complete initiation of the joint positional tracking session and begin sharing positional data between the first user and the second user. In some examples, the navigation service can identify a plurality of users that have associated predicted travel data and send invitations to all of them.

In some examples, the navigation service continues to monitor the users of a joint positional tracking session as each member periodically uploads positional data via an associated computing device (e.g., a smartphone, tablet computer, and so on). According to the invention, the navigation service determines a separation parameter for a user. The separation parameter represents a distance between a respective user and the closest other user participating in the joint positional tracking session. For example, if three users are included in the joint tracking positional process session, the navigation service determines a separation parameter for each respective user by determining their distance from the closest other user in the joint positional tracking service session.

In some examples, that do not correspond to the claimed invention, the separation parameter can be measured by determining the position of a first user and determining an average position of all other users in the joint positional tracking session. The separation parameter can then be generated by calculating the difference between the position of the first user and the average position of the other users. In some examples, that do not correspond to the claimed invention, the separation parameter can represent a predicted time to destination.

The navigation service can calculate a separation parameter for a respective user by comparing the time to destination of the respective user to the average time to destination for the other users included in the joint navigation tracking process session. If a respective user's time to destination exceeds the time to destination for the other users by a determined threshold, the navigation service can determine that the respective user may have encountered a problem that separated the respective user from the rest of the group. In some examples, that do not correspond to the claimed invention, the navigation service can calculate a separation parameter based on a prediction of future separation. For example, two users in a joint positional tracking session are using a train. The first user is estimated to arrive to the train station just before the planned train leaves the station. The second use is estimated to arrive at the train station just after the planned train leaves the station. The two users may be close in physical distance, but the navigation service can still calculate a separation parameter that exceeds a threshold based on an estimation that the first user will get on the train and the second user will not.

Once the navigation service has determined a separation parameter, the navigation service determines whether the separation parameter exceeds a threshold separation value. The threshold separation value represents a threshold at which a user is considered to have been separated from the joint positional tracking session. When the navigation service determines that a user has left the joint positional tracking session by exceeding the threshold separation value, the navigation service can alert the other members of the joint positional tracking service session. According to the invention, the navigation service automatically generates navigational data in the form of route updates designed to reduce the separation parameter for the user that has previously exceeded the threshold separation value.

According to the invention, if the navigation service determines that a user has exceeded the threshold separation value, the navigation service selects an additional regrouping waypoint at which the users of the joint positional tracking service session can reconvene. In some examples, the waypoint can be selected based on one or more factors including travel distance, ease of parking, user interest, time of day, and other factors. For example, the navigation service may select a highway rest area to reconvene the users of the joint positional navigation session because of ease of access and available parking. In other examples, the navigation service can select a restaurant based on the current time of day (e.g., when the time is around lunch or dinner time). In some examples, the navigation service may generate a plurality of potential options and display them to the users through the navigational application installed on the user's computing devices. The users can then select one or more of the plurality of options.

In some examples, the navigational data includes an alternate route (e.g., a detour) for one or more of the users in the joint positional tracking service session. For example, the navigation service can determine that an alternate route would allow the user whose separation parameter has exceeded the threshold separation value to rejoin the other users without needing to make a specific stop. Based on this determination, the navigation service can update the routes of each user to the alternate route, and thereby allow a user that has been separated from the one or more other users of the joint positional tracking service session to close the distance and rejoin the session.

In an example embodiment, when the navigation service determines that a separation parameter associated with one or more users has exceeded a threshold separation value, the navigation service can transmit a notification to one or more users in the joint positional tracking session. In some examples, the notification can include a prompt that allows each user in the session to state their preference for resolving this issue. For example, the notification can include a prompt asking whether a stop should be added to the itinerary and if so, what stop would be preferred. The navigation service can collect responses to this question and select an option based on the user responses.

In some examples, the navigation service can determine that one or more adjustments to the current navigational route may need to be made in the future. For example, the navigation service may consider one or more factors to determine when and if adjustments should be made to the current navigation route. Factors can include but are not limited to: fuel measurement data for one or more vehicles, check engine light, loss of tire pressure; landmarks, (e.g. points of interest), border crossing, potential meal requirements, estimated driver fatigue, and/or regulatory resting time. Based on these factors, the navigation service can update the current navigational route. In some examples, the navigation service can provide warnings or notifications to users of the joint navigational process session and update the current navigational route based on user-submitted feedback and preferences.

In some examples, users in the joint positional tracking session can request that the navigation service alter the current navigational route to add an additional waypoint or to generate an alternate route. In some examples, users can transmit messages (through the navigation application on an associated computing device) to other users of the joint positional tracking session to propose additional waypoints or an alternate route. The users can communicate through the navigation application to select a specific stopping location or alternate route. Once a specific stopping location is selected by the users of the joint positional tracking service session, the navigation service can update the navigational route to include the selected stopping location (or the alternate route). In this way, a route can be either be customized automatically when the navigation either detects an issue (e.g., one of the users being separated from the group) or based on user input (e.g., when one or more users request a change to the current route).

In some examples, the joint positional tracking session can be concluded when either the users or the navigation service determines that the session is no longer needed. For example, one or more users in the joint positional tracking session can request that the joint positional tracking session be concluded (e.g., the session is terminated and positional information for other users is no longer shared). If the other users of the joint positional tracking session agree (e.g., by accepting a request to cancel display in a user interface of a navigation application), the navigation service can conclude the joint position tracking session. In some examples, each user can withdraw from the joint session tracking session at any point. If the navigation service determines that one or fewer users is in the joint positional tracking session the navigation service can automatically conclude the joint positional tracking session.

In some examples, the navigation service can determine whether the users in the joint positional tracking service have reached the target destination of the joint positional tracking session. In response to determining that each user in the joint positional tracking service has reached the target destination, the navigation service can determine that the joint positional tracking service is no longer needed and automatically conclude the joint positional tracking session.

In some embodiments, the navigation service includes a server computing system that provides navigational data to one or more user computing devices. The user computing devices can include a personal computer, a smartphone, a tablet computer, a global positioning service device, a smartwatch, and so on. The user computing device can include a dedicated application associated with the navigation service. The user computing device can also include a multi-function application (e.g., a web browser) that can access the navigation service (e.g., through a web page) without being specifically dedicated to the navigation service. In some examples, the user computing device submits navigation requests (e.g., including a destination) and receives navigational data (e.g., including turn-by-turn instruction data) from the server computing system associated with the navigation service. In some examples, the user computing device can store map data received from the navigation service. Thus, the user computing device can, in some situations, generate navigational data based on the locally stored map data without specifically needing to contact the navigation service.

In some examples, a user computing device can participate in a joint positional tracking session via data received from the server computing system. The server computing system can generate a data structure that represents a particular joint positional tracking session, track the position of each user including the in the joint positional tracking service session, transmit positional data to each user in the joint positional tracking session, and update the navigational data when necessary (e.g., based on detecting a user being separated from the other users or a request from a user).

In some examples, that do not correspond to the claimed invention, a user computing device can, using a navigation application,
manage a joint positional tracking service session with one or more other users without needing to contact a server computing system. For example, if contact with a server computing system is unavailable or is interrupted, one or more user computing devices can use local wireless communication methods to create and administer a joint positional tracking session. In this example, one user computing device from the group of users can be selected, either automatically or based on user selection, as an administrative device that can collect user positional data and distribute it to each of the other user computing devices for display. In addition, the selected administrative device can generate navigational data and/or route updates and transmit that data to computing devices associated with one or more other users in the joint positional tracking service session.

In some examples, the selected administrative device can determine whether the other user computing devices are within communication distance (e.g., detecting whether the user computing devices can communicate with the administrative device). In accordance with detecting that a user computing device are no longer in communication range, the administrative device can determine that the user computing device is separated from the joint positional tracking session (e.g., that the user has exceeded a threshold separation value). In response to this determination, the administrative device can notify one or more other user computing devices that are still within communication range. In some examples, the administrative device can generate one or more adjusted planned routes to re-establish connection with the separated user computing device.

The systems and methods described herein provide a number of technical effects and benefits. More particularly, the systems and methods of the present disclosure provide improved techniques for providing group navigation options for a plurality of users and/or vehicles to allow efficient group navigation within a navigation service. For instance, the navigation service can automatically alter a planned route for a group when one or more users become separated from the group. Doing so leads to an improvement in efficiency for the navigation service, by reducing the need for the time-consuming and tedious use of individual navigational devices to resolve the navigational issue. By automatically updating navigational data to resolve the problem, the navigation service is able to reduce the use of communications systems, processing power, and memory. As such, the efficiency created by the disclosed group navigation process results in real-world power savings and reduces the costs needed to provide a navigation system.

In addition, the ability to establish an identifier for a future joint positional tracking session automatically, based on predicted travel data for one or more users, enables an efficient mechanism for controlling the sharing of positional data among users in a joint positional tracking session. At the start time of particular session identified on this basis, a user may simply need to confirm or accept participation in the session, with parameters for the session having already been configured in advance. The likelihood of a user accepting participation in the session is increased if the identifier for the session has been established based on information associated with the user's likely travel plans, and so the server system associated with the navigation service may make more efficient use of its resources in establishing a joint positional tracking session which is more likely to be relevant to users. Additionally, the provision of, for example, an alert to a user's computing device relating to an identifier of a joint positional tracking system that can be joined, can be made more efficient in terms of the resources associated with the transmission of the alert to the user's device, the presentation of the alert on an interface on the user's device, and the interruption of other applications on the user's device, if the relevance of the alert is increased by basing the identified joint positional tracking system on predicted travel information.

With reference now to the Figures, example embodiments of the present disclosure will be discussed in further detail.

### Example Devices and Systems

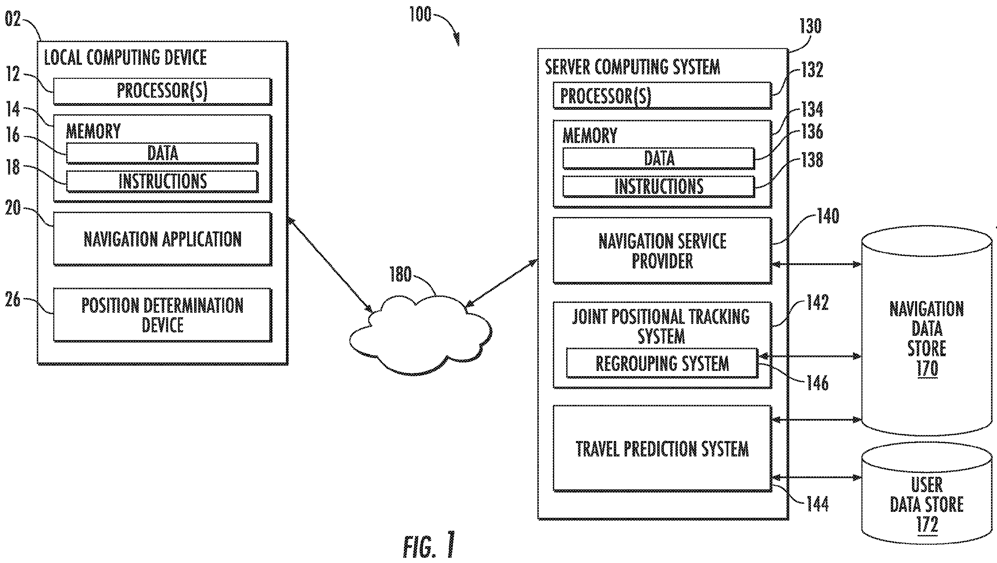

FIG. 1 depicts an example client-server environment 100 according to example embodiments of the present disclosure. The client-server environment 100 includes a local computing device 102 and a server computing system 130 that are connected by and communicate through a network 180. Although a single local computing device 102 is depicted, any number of local computing devices 102 can be included in the client-server environment 100 and connect to server computing system 130 over a network 180.

In some example embodiments, the local computing device 102 can be any suitable device, including, but not limited to, a smartphone, a tablet, a laptop, a desktop computer, a global positioning system (GPS) device, or any other computer device that is configured such that it can allow a person to access a navigation service at a server computing system. The local computing device 102 can include one or more processor(s) 112, memory 114, a navigation application 120, and a position determination device 126.

The one or more processor(s) 112 can be any suitable processing device, such as a microprocessor, microcontroller, integrated circuit, or other suitable processing device. The memory 114 can include any suitable computing system or media, including, but not limited to, non-transitory computer-readable media, RAM, ROM, hard drives, flash drives, or other memory devices. The memory 114 can store information accessible by the one or more processor(s) 112, including instructions that can be executed by the one or more processor(s) 112. The instructions can be any set of instructions that when executed by the one or more processor(s) 112, cause the one or more processor(s) 112 to provide the desired functionality.

In particular, in some devices, memory 114 can store instructions for implementing navigational application 120 and a position determination device 126. The local computing device 102 can implement the navigation application 120 to execute aspects of the present disclosure, including directing communications with server computing system 130 and providing a navigation services (e.g., turn-by-turn directions, a joint positional tracking process, geographic based searching, and so on) to a user.

It will be appreciated that the terms "system" or "engine" can refer to specialized hardware, computer logic that executes on a more general processor, or some combination thereof. Thus, a system or engine can be implemented in hardware, application specific circuits, firmware, and/or software controlling a general-purpose processor. In one embodiment, the systems can be implemented as program code files stored on a storage device, loaded into memory and executed by a processor or can be provided from computer program products, for example computer executable instructions, that are stored in a tangible computer-readable storage medium such as RAM, hard disk, or optical or magnetic media.

Memory 114 can also include data 116, such as map data associated with the navigation application 120 (e.g., data representing a geographic area including one or more roads and a one or locations of interest received from the service system 130), that can be retrieved, manipulated, created, or stored by the one or more processor(s) 112. In some example embodiments, such data can be accessed and displayed to one or more users of the local computing device 102 (e.g., during use of a navigation application 120) or transmitted to a server computing system 130 as needed.

In some example embodiments, the local computing device 102 includes a navigation application 120. A navigation application 120 can provide navigation services to a user. In some examples, the navigation application 120 can facilitate a user's access to a server computing system 130 that provides navigation services. In some example embodiments, the navigation services include providing directions to a specific location. For example, at user can input a destination location (e.g., an address). In response, the navigation application 120 can, using locally stored map data for a specific geographic area, provide navigation information allowing the user to navigate to the destination location. The navigation information can include turn by turn directions from a current location (or a provided location) to the destination location.

The navigation application 120 can provide, in a display, a visual depiction of a geographic area. The visual depiction of the geographic area can include one or more streets, one or more points of interest (including buildings, landmarks and so on), and a highlighted depiction of a planned route. In some examples, the navigation application 120 can also provide location-based search options to identify one or more searchable points of interest within a given geographic area. In some examples, the navigation application 120 can include a local copy of the relevant map data. In other examples, the navigation application 120 accesses information at a remote server computing system 130 to provide the requested navigation services.

In some examples, the navigation application 120 can be a dedicated application specifically designed to provide navigation services. In other examples, the navigation application can be a general application (e.g., a web browser) and can provide access to a variety of different services including a navigation service via the network 180.

A navigation application 120 can provide a joint positional tracking session. In some examples, a user can request the creation of a joint positional tracking session through the navigation application 120. In some examples, the navigation application 120 can transmit the request to create a joint positional tracking process to the server computing system 130. In response, the server computing system 130 can create a specific joint positional tracking session. In some examples, the request to create a joint positional tracking session can include one or more user identifiers for other users of the navigation service. The server computing system 130 can use the one or more user identifiers to invite one or more other users to the joint positional tracking session.

In some examples, the navigation application can receive from the server computing system 130, an invitation to a joint positional tracking session. For example, in a user interface associated with the navigation application 120, an invitation can be displayed to a user. The invitation can include information identifying one or more other users already included in the joint traditional tracking process. In some examples, the invitation can include a proposed destination position and time. The invitation can include an identifier for a specific joint positional tracking session. The invitation can include an option to accept the invitation and a selectable option to reject the invitation.

Once a user has joined a joint positional tracking session, the navigation application 120 can display positional data for one or more other users in the joint positional tracking session. In some examples, the user interface of the navigation application can include a geographic map and a highlighted position of one or more users in the geographic map location. The navigation application 120 can continue to receive updated positional information for the one or more other users in the joint positional tracking session and continue to update the display to display the current position of the other users in the joint position tracking session.

While a user is participating in a joint positional tracking session, the navigation application 120 can provide options to communicate with one or more other users in the joint positional tracking session. For example, one user can transmit a message to one or more other users in the joint positional tracking session. In addition, a user can suggest one or more additional stops in the planned navigation route. For example, if the user wishes to stop at a gas station or restaurant, the user can suggest the additional stop to the other users included in the joint positional tracking session. Each other user can then respond to the suggestion by accepting the suggestion, rejecting the suggestion, or providing an alternative.

In some example embodiments, a user can receive a notification that one or more users in the joint positional tracking session have left an established perimeter for the joint positional tracking session. For example, a particular user can be separated from the group of users in the joint positional tracking session by taking an incorrect route or being stopped by a stoplight. In response, the server computing system 130 associated with the navigation service can notify the one or more other users that one user has been separated from the other users in the joint positional tracking session. In addition, the navigational application 120 can receive updated route information that is intended to cause the users in the joint positional tracking process to reconvene.

The position determination device 126 can generate a current position for the local computing device 102. In some examples, the position determination device 126 can use global positioning system (GPS) technology to determine a current position for the local computing device 102. In some examples, other location determination systems can be used (e.g., based on a dead-reckoning system or similar system). The current position data generated by the position determination device 126 can be transmitted to the server computing system 130 for analysis.

In accordance with some example embodiments, the server computing system 130 can include one or more processor(s) 132, memory 134, a navigation service provider 140, a joint position tracking system 142, a travel prediction system 144, a navigation data store 170, and a user data store 172. The memory 134 can store information accessible by the one or more processor(s) 132, including instructions 138 that can be executed by processor(s) and data 136.

The server computing system 130 can be in communication with one or more local computing device(s) 102 via the network system 180 using a network communication device that is not pictured. In some example embodiments, the navigation service provider 140 can provide navigation services to one or more local computing devices 102 over a network system 180. The services provided by the navigation service provider 140 can include location-based services, route generation to a particular location, turn-by-turn navigation instructions, geographic map display services, satellite imagery overlay services, and position tracking services, and other navigational services. Users can submit requests to the server computing system 130, and the navigation service provider 140 can process those requests to provide the requested navigation service. For example, a user can transmit a request for directions to a particular location. In response, the navigation service provider 140 can access navigation data store 170, calculate, based on data in the navigation data store 170, one or more routes to the requested location, and transmit the information describing the one or more routes to the local computing device 102.

In some example embodiments, a service provided by the server computing system 130 can be provided by the joint positional tracking system 142. In some examples, the joint positional tracking system 142 can initiate a joint positional tracking session (or group) in response to user requests. A joint positional tracking process can enable multiple users to share positional data with each other while navigating to a shared destination using the navigation service. For example, a plurality of users each has an associated local computing device 102, each including a display and an installed navigation application 120.

When a joint positional tracking session is initiated, each local computing device 102 can transmit a location to the joint positional tracking system 142. The joint positional tracking system 142 can share the received positional data from some or all of the local computing devices 102 with each local computing device 102 associated with a user in the joint positional tracking session. Each local computing device 102 can display the location of some or all of the other users included in the joint positional tracking session in a user interface associated with the navigation application. In this way, a user can view the current position of other users in the joint positional tracking session. Thus, users intending to travel together (e.g., in a vehicle caravan or the equivalent) to a common destination can be aware of the progress and current location of each other user in the group.

In some examples, the joint positional tracking system 142 can initiate a joint positional tracking session in response to a request from one or more users. For example, if two users plan to follow the same route to a common destination and want to travel together in a group or caravan, one of the users can transmit a request to the joint positional tracking system 142 through their respective local computing devices 102 and request that a joint positional tracking session be created for their trip. In response, the joint positional tracking system 142 can generate a new joint positional tracking session that includes the two users. In some examples, a first user can request the joint positional tracking session be created and then request that the joint positional tracking system 142 send an invitation to one or more other users to join the joint positional tracking session. In response, the joint positional tracking system 142 can transmit an invitation to one or more local computing devices 102 (e.g., based on a user identifier received from the inviting user.)

In some examples, a joint navigation tracking process session can be generated automatically by the joint positional tracking system 142 at the server computing system 130 based on data received from the travel prediction system 144. In some examples, the travel prediction system 144 may have access to a user data store 172 for a plurality of users that access the navigation service provided by the server computing system 130. The travel prediction system 144 can analyze the user data in the user data store 172 to generate predicted travel data for one or more users. For example, the travel prediction system 144 can access the current position and heading data for a user. Based on the current position and heading of a user, the travel prediction system 144 can estimate a likely destination for a user. Based on the current position and likely destination, the travel prediction system 144 can generate predicted travel data that includes a predicted route for a user from the current position to the likely destination.

In another example the travel prediction system 144 can access calendar information for one or more users from the user data store 172. The calendar information for a user can include one or more scheduled appointments. The travel prediction system 144 can access information concerning the location of each appointment and compare that to the user's current location. The travel prediction system 144 can access the navigation data store 170 to generate predicted travel data based on the time and location of the appointment and the likely route the user will take to arrive at the appointment at the given time. In some examples, the likely route may be based on past travel data (stored in the user data store 172) for the user.

In some examples, the travel prediction system 144 can analyze past movement data to identify one or more past trips the user has taken. Based on this analysis of user data, the travel prediction system 144 can predict travel data for the user. For example, if a user routinely makes a particular trip, the travel prediction system 144 can generate predicted travel data for a similar trip in the future. For example, if a particular user travels from New York City to a town in upstate New York on most Saturdays during a given time period, the travel prediction system 144 may generate predicted travel data that represents a trip to upstate New York on the next Saturday.

In some examples, predicted travel data can include an initial position (e.g., a starting place and time), a destination position (e.g., an ending place and time), and a route between the initial position and the destination position. The route can be a predicted travel route generated by the travel prediction system 144 based on common travel patterns or a user's historical travel preferences and the map data included in the navigation data store 170. In some examples, once the travel prediction system 144 has generated predicted travel data for a first user, the travel prediction system 144 can compare the predicted travel data with the predicted travel data of one or more other users. In some examples, the travel prediction system 144 can compare a first user's predicted travel data with the predicted travel data of one or more users selected by the navigation service. The one or more selected users can be selected based on social network data stored in the user data store 172 for the first user. For example, the travel prediction system 144 may only compare predicted travel data between users who are already known to be connected to each other through a social connection.

The travel prediction system 144 can compare predicted travel data for a first user with the predicted travel data of a second user. As at least part of the comparison, the travel prediction system 144 can generate a match score that represents the degree to which the time and destination of a first user's predicted travel data match the time and destination of the second user's predicted travel data. If the match score between the first user's predicted travel data and the second user's predicted travel data exceeds a threshold value, the travel prediction system 144 can determine that the first user's predicted travel data has an association with the second user's predicted travel data. For example, if two user's predicted travel times have a high match score, the travel prediction system 144 can predict the two users are traveling on the same path to the same destination at approximately the same time.

Once the travel prediction system 144 has determined that the travel data of two users have an association, the joint positional tracking system 142 can initiate a potential joint positional tracking session. As part of initiating a potential joint positional tracking session, the joint positional tracking system 142 can transmit an invitation to local computing devices associated with at least a first user and a second user. The invitation includes an identifier for the potential joint positional tracking session and an option for the user to join the potential joint positional tracking session. In response, a determination that two or more users have selected the option to join the joint positional tracking session, the joint positional tracking system 142 can complete initiation of the joint positional tracking session and begin sharing positional data between the first user and the second user. In some examples, the joint positional tracking system 142 can identify a plurality of users that have associated predicted travel data and send invitations to all of them.

In some examples, the joint positional tracking system 142 can continue to monitor the users of a joint positional tracking session as each user periodically uploads positional data via an associated local computing device 102 (e.g., a smartphone, tablet computer, and so on). In some examples, the joint positional tracking system 142 can calculate a separation parameter for each user. The calculated separation parameter comprises a measurement of the distance between a respective user and one other user in the joint positional tracking session. The one other user is the closest other user participating in the joint positional tracking session. For example, if three users are included in the joint positional tracking session, the joint positional tracking system 142 can calculate a separation parameter for each respective user by determining their distance from the closest other user in the joint positional tracking session.

In some examples, that do not correspond to the claimed invention, the separation parameter can be measured by determining the position of a first user and determining an average position of all other users in the joint positional tracking session. The separation parameter can then be generated by calculating the difference between the position of the first user and the average position of the other users. In some examples, that do not correspond to the claimed invention, the separation parameter can represent a predicted time to destination. The joint positional tracking system 142 can calculate a separation parameter for a respective user by comparing the time to destination of the respective user to the average time to destination for the other users included in the joint navigation tracking process session. If a respective user's time to destination exceeds the time to destination for the other users by a determined threshold, the joint positional tracking system 142 can determine that the respective user may have encountered a problem that separated the respective user from the rest of the group.

Once the joint positional tracking system 142 has calculated a separation parameter for each user in the joint positional tracking session, the joint positional tracking system 142 determines whether any of the users has a separation parameter that exceeds a threshold separation value. The threshold separation value represents a threshold at which a user is considered to have been separated from the joint positional tracking session. When the joint positional tracking system 142 determines that a user has been separated from the joint positional tracking session by exceeding the threshold separation value, the joint positional tracking system 142 can alert the other members of the joint positional tracking service session. In some examples, the joint positional tracking system 142 can employ the regrouping system 146 to automatically generate navigational data designed to reduce the separation parameter for the user that has previously exceeded the threshold separation value.

For example, the joint positional tracking system 142 can alert the other users in the joint positional tracking service determines that a user has exceeded the threshold separation value. The regrouping system 146 selects an additional regrouping waypoint at which the users of the joint positional tracking service session can reconvene. The regrouping system can access the navigational data store 170 to generate or update navigation data. In some examples, the waypoint can be selected by the regrouping system 146 based on one or more factors including travel distance, ease of parking, user interest, time of day, and other factors. For example, the regrouping system 146 may select a highway rest area to reconvene the users of the joint positional navigation session because of ease of access and available parking. In other examples, the regrouping system 146 can select a restaurant based on the current time of day (e.g., when the time is around lunch or dinner time). In some examples, the regrouping system 146 may generate a plurality of potential options and display them to the users through the navigational application installed on the user's computing devices. The users can then select one or more of the plurality of options. In some examples, the regrouping system 146 can select more than one waypoint and regroup the users in more than one step. For example, two of the users can first meet a point A, before going on to rejoin the other users at point B.

In some examples, the navigational data includes an alternate route (e.g., a detour) for one or more of the users in the joint positional tracking service session. For example, the regrouping system 146 can determine that an alternate route would allow the user whose separation parameter has exceeded the threshold separation value to rejoin the other users without needing to make a specific stop. Based on this determination, the regrouping system 146 can update the routes of each user to the alternate route, and thereby allow a user that has been separated from the one or more other users of the joint positional tracking service session to close the distance and rejoin the session.

In an example embodiment, when the joint positional tracking system 142 determines that a separation parameter associated with one or more users has exceeded a threshold separation value, the joint positional tracking system 142 can transmit a notification to one or more users in the joint positional tracking session. In some examples, the notification can include a prompt that allows each user in the session to state their preference for resolving this issue. For example, the notification can include a prompt asking whether a stop should be added to the itinerary and if so, what stop would be preferred. The joint positional tracking system 142 can collect responses from one or more local computing devices 102 via the network 180 to this question and select an option based on the user responses.

In some examples, the joint positional tracking system 142 can determine that one or more adjustments to the current navigational route may need to be made in the future. For example, the joint positional tracking system 142 may consider one or more factors to determine when and if adjustments should be made to the current navigation route. Factors can include but are not limited to: fuel measurement data for one or more vehicles, check engine light, loss of tire pressure; landmarks, (e.g. points of interest), border crossing, potential meal requirements, estimated driver fatigue, and/or regulatory resting time. Based on these factors, the joint positional tracking system 142 can update the current navigational route. In some examples, the joint positional tracking system 142 can provide warnings or notifications to users of the joint navigational process session and update the current navigational route based on user-submitted feedback and preferences.

In some example embodiments, the navigation data store 170 can store a variety of navigation data. For example, the navigation data store 170 can include map data. In some examples, the map data can include a series of sub-maps, each sub-map including data for a geographic area including objects (e.g., buildings or other static features), paths of travel (e.g., roads, highways, public transportation lines, walking paths, and so on), and other features of interest. The navigation data store 170 can also include image data, the image data associated with one or more geographic areas. The navigation data store can also include satellite image data associated with one or more geographic areas.

In some example embodiments, the user data store 172 can represent a single database. In some embodiments, the user data store 172 represents a plurality of different databases accessible to the server computing system 130. In some examples, the user data store 172 can include the current user position and heading data. In some examples, the user data store 172 can include a variety of user data including user calendar data, user social network data, user historical travel data, and user preference data.

The network 180 can be any type of communications network, such as a local area network (e.g., intranet), wide area network (e.g., Internet), or some combination thereof. In general, communication between the local computing device 102 and the server computing system 130 can be carried via network interface using any type of wired and/or wireless connection, using a variety of communication protocols (e.g., TCP/IP, HTTP), encodings or formats (e.g., HTML, XML), and/or protection schemes (e.g., VPN, secure HTTP, SSL).

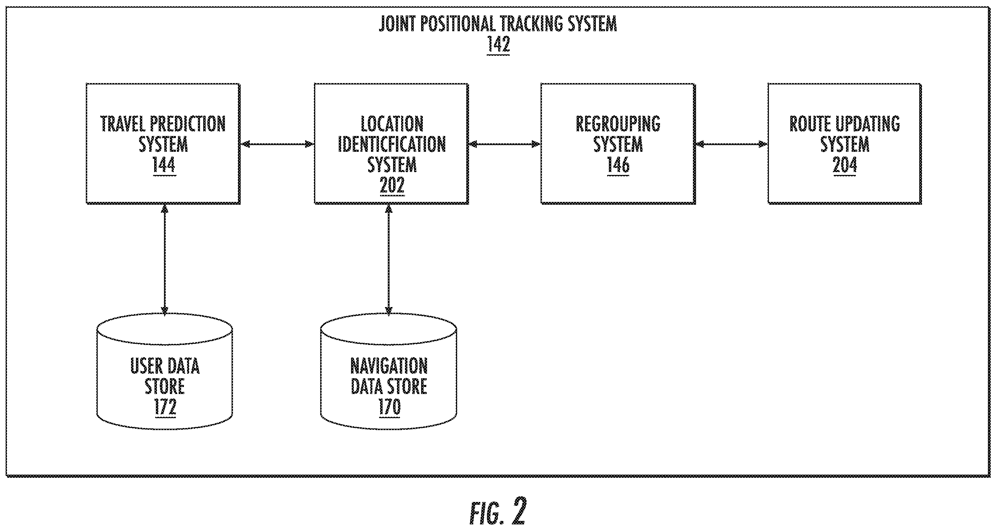

FIG. 2 depicts an example joint position tracking system 142 according to example embodiments of the present disclosure. In this example, the joint positional tracking system 142 includes one or more components in a configuration that differs from the configuration displayed in FIG. 1. For example, the joint positional tracking system 142 can include a travel prediction system 144, a location identification system 202, a regrouping system 146, a route updating system 204, a user data store 172, and a navigation data store 170.

In some example embodiments, the joint positional tracking system 142 can include a travel prediction system 144. The travel prediction system 144 can access user data in a user data store 172 to generate one or more predicted travel plans, as described above. Using the predicted travel plans, the travel prediction system 144 can determine two or more users with matching predicted travel plans. Based on this determination, the travel prediction system 144 can initiate a joint position tracking session for the two or more users.

In some example embodiments, the once a joint positional tracking session has been imitated, a location identification system 202 can receive positional information from one or more local computing devices associated with one or more users. The location identification system 202 can analyze the received positional information to determine whether a separation parameter associated with a particular user has exceeded a threshold separation value. The separation parameter can be generated based, at least in part, on data stored in the navigation data store 170.

Once the location identification system 202 determines that at least one user has exceeded the threshold separation value, the regrouping system 146 can generate updated navigation plans to allow the separated user to regroup with the other users. For example, the regrouping system 146 can add one or more additional stops to a planned route. The users can then go to the stop, and, when all users have rejoined, continue on the planned route.

The route updating system 204 can send the updated navigation plans to one or more local computing devices associated with users in the joint position tracking session.

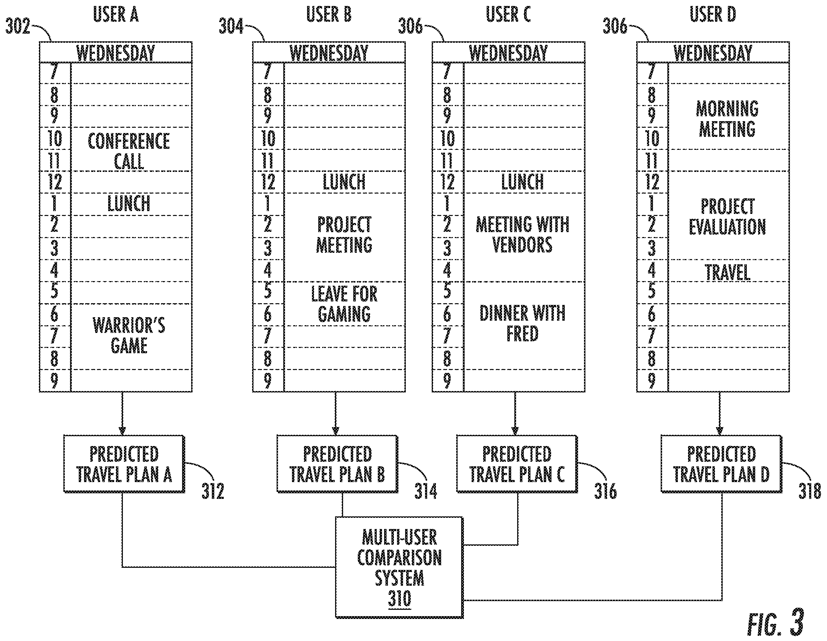

FIG. 3 depicts an example block diagram for the execution of a prediction system according to example embodiments of the present disclosure. As seen in this example, the travel prediction system (e.g., travel prediction system 144 in FIG. 1) can access user data associated with a plurality of users (e.g., User A, User B, User C, and User D). In some examples, the specific users can be selected based on social network data for the users. For example, the plurality of users (e.g., User A, User B, User C, and User D), can all be connected in the social network data accessible to the travel prediction system (e.g., user data store 172 in FIG. 1).

In this example, the travel prediction system can access calendar data for the four users. The calendar data for User A, User B, User C, and User D, 302, 304, 306, and 308 respectively, can include one more calendar appointment. The travel prediction system can generate predicted travel data for each user based on the one or more calendar appointments. For example, the travel prediction system generates predicted travel plan A 312 for User A, predicted travel plan B 314 for User B, predicted travel plan C 316, and predicted travel plan D 318.

Each predicted travel plan (e.g., 312 - 318) can be transmitted to the multi-user comparison system 310. In some examples, the multi-user comparison system 310 can be included in a travel prediction system.

In this example, the predicted travel plans for three users (User A, User B, and User D) can include plans to travel to a Warrior's basketball game. As such, the multi-user comparison system 310 can determine that predicted travel plan A 312, predicted travel plan B 314, and predicted travel plan D 318 are associated with each other and the users may be interested in joining a joint positional tracking session. In some examples, based on this determination, the multi-user comparison system 310 can generate an invitation to invite users A, B, and D to a joint positional tracking session.

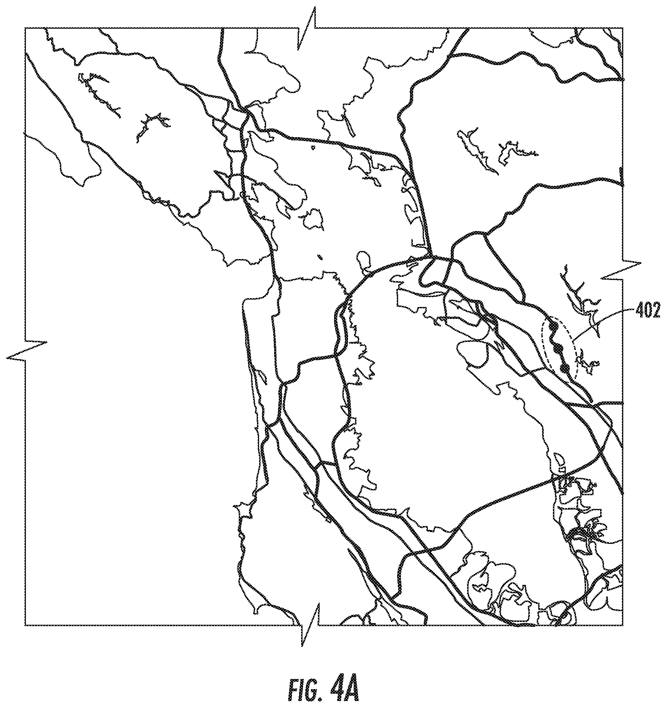

FIGS. 4A-4C depict an example user interface according to example embodiments of the present disclosure. In this example, three users are including a joint positional tracking session and their positions are displayed on a geographic map. In addition, this example map also depicts an example distance boundary 402. In FIG. 4A, all three users are on the same path and are within the example distance boundary. The depicted distance boundary 402 may be calculated based on the distance from an average position of all users included in the joint position tracking session.

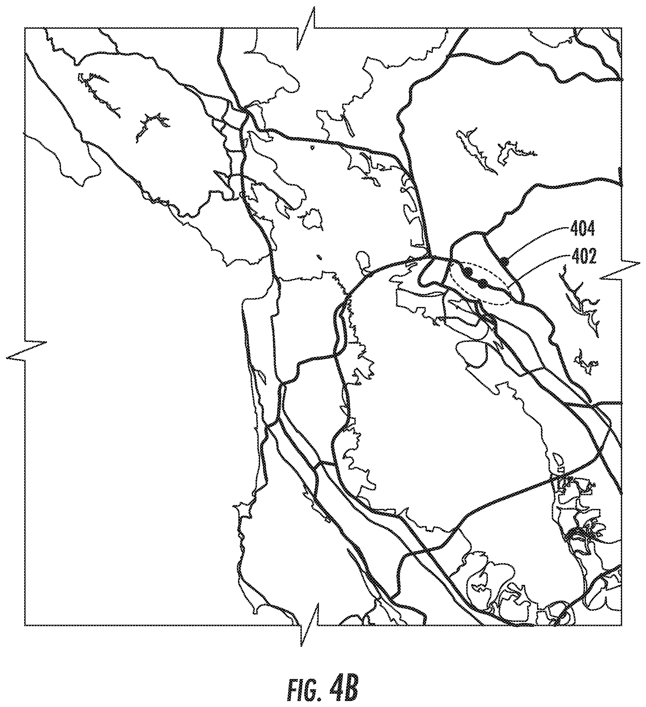

FIG. 4B depicts an example situation in which one 404 of the three users included in the joint position tracking session has been separated from the other users of the joint position tracking session and has thus crossed the example distance boundary 402.

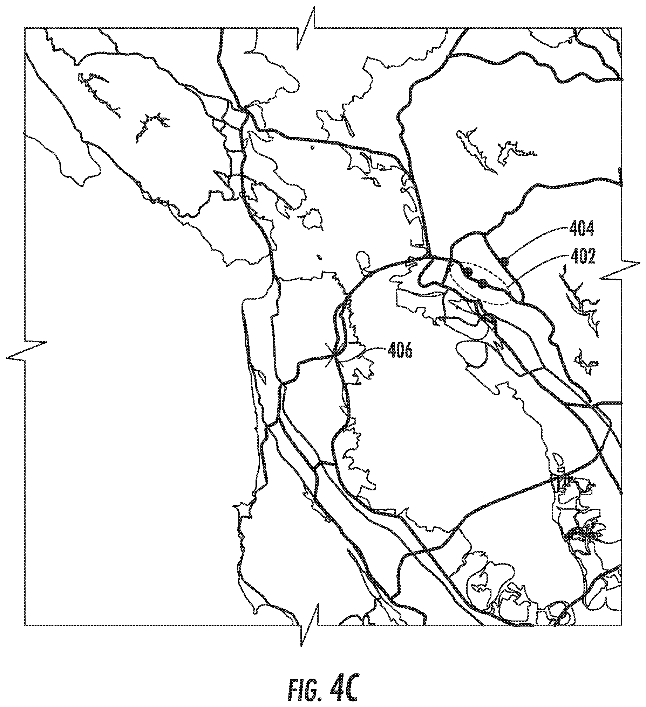

FIG. 4C depicts an example situation in which a regrouping system 146 has automatically generated a regrouping point 406. The planned travel route of all three vehicles has been updated to include generated regrouping point 406. Thus, each user can travel towards regrouping point 406. Once the vehicles have all reached the regrouping point 406, they can continue on their existing route.

### Example Methods

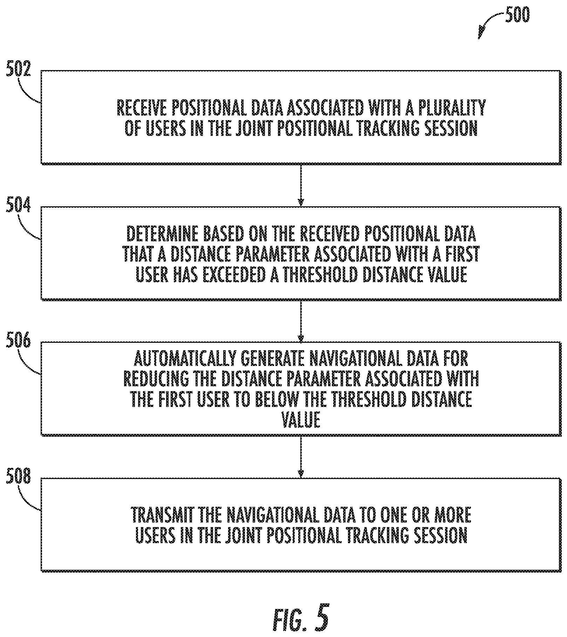

FIG. 5 depicts an example flow diagram for a method of group navigation according to example embodiments of the present disclosure. Although method (500) will be discussed with reference to the server computing system 130 of FIG. 1, method (500) can be performed by any suitable computing system.

In addition, FIG. 5 depicts steps performed in a particular order for purposes of illustration and discussion. Those of ordinary skill in the art, using the disclosures provided herein, will understand that the various steps of method (500) can be omitted, adapted, and/or rearranged in various ways without departing from the scope of the present disclosure.

In some example embodiments, the server computing system (e.g., server computing system 130 in FIG. 1) can initiate a joint positional tracking session which includes a plurality of users. In some examples, the joint positional tracking session is initiated in response to a request to generate the joint positional tracking session received from a computing device associated with a user. The request can include an identifier associated with at least one other user to be invited to the joint position tracking session.

In some examples, the server computing system can obtain predicted travel data for the plurality of users. The server computing system can compare respective predicted travel data for individual users in the plurality of users. The server computing system identifies an association between a subset of users in the plurality of users based on a correspondence between the predicted travel data for the subset of users.

In some example embodiments, the server computing system provides an identifier for a potential joint positional tracking session to a plurality of devices associated with the subset of users. In response to receiving responses from at least two devices associated with users in the subset of users, the server computing system initiates the joint positional tracking session for the plurality of devices.

In some examples, the server computing system can access user data for the plurality of users from one or more databases associated with the server computing system. The server computer system can generate predicted travel data for a respective user including a predicted destination position and time for the respective user based on user data associated with the respective user. The user data for a respective user can include calendar data associated with the respective user's upcoming schedule and the predicted destination position and time are determined based on appointment data included in the respective user's calendar data. In some example embodiments, calendar data can refer to more than just currently scheduled appointments in a user's calendar. For example, if a user has an email confirming purchase of tickets for a movie at a particular theater and at a particular time, the server computing system can determine that the user is planning to travel to the particular theater at the particular time. Similarly, the calendar data can refer to inferred calendar data gathered based on social media data (e.g., a post indicating particular plans), financial data (e.g., ticket purchase), past navigation searches (e.g.., finding directions for a particular location), and so on.

The user data for a respective user can include current positional data and a current direction of travel for the respective user and the predicted destination position and time are determined at least partially based on the respective user's current positional data and current direction of travel. The user data for a respective user can include historical data associated with the respective user's travel history and the predicted destination position and time are determined based on one or more recorded past destinations associated with the respective user.

In some example embodiments, the server computing system can access social data associated with a respective user in the plurality of users. The server computing system can identify, based on social data associated with the respective user, a subset of users associated with the respective user. The server computing system can compare the predicted travel data associated with the respective user with the predicted travel data associated with each user in the subset of users. The identifier can be included in a request to join the joint positional tracking session sent to a computing device associated with a user in the subset of users. The server computing system can periodically receive positional data associated with one or more users in the joint positional tracking session. The server computing system can transmit the received positional data to one or more users the joint positional tracking session.

In some example embodiments, a server computing system (e.g., server computing system 130 in FIG. 1) receives at 502, from a plurality of users in a joint positional tracking session, positional data associated with a first user and at least one other user in the plurality of users in the joint positional tracking session. The server computing system determines, at 504 based on the received positional data associated with the first user and at least one other user in the plurality of users, that a separation parameter associated with the first user has exceeded a threshold separation value, the separation parameter associated with the first user representing a distance between the first user and one other user in the plurality of users.

The separation parameter represents a distance between the received positional data associated with the first user and received positional data associated with a closest other user in the plurality of users in the joint positional tracking session.

In some examples, that do not correspond to the claimed invention, the separation parameter represents a distance between the received positional data associated with the first user and an average of the received positional data associated with one or more other users in the plurality of users in the joint positional tracking session. In some examples, that do not correspond to the claimed invention, the separation parameter can represent a difference between an expected arrival time for the first user and an average expected arrival time for the at least one other users in the plurality of users in the joint positional tracking session.

The server computing system automatically generates at 506 navigational data for reducing the separation parameter between the first user and one other user in the joint positional tracking session to below the threshold separation value. The navigational data includes navigation instructions to alter current path data at one or more computing devices associated with the plurality of users in the joint positional tracking session to include an additional regrouping waypoint.

In some example embodiments, the navigational data can include instructions to alter current path data at one or more computing devices associated with the plurality of users in the joint positional tracking session to reduce the separation parameter associated with the first user to a value below the threshold separation value.

The server computing system transmits at 508 the navigational data to the first user and the other user in the joint positional tracking session. The server computing system can transmit a notification to one or more users in the joint positional tracking session that the separation parameter associated with the first user has exceeded the threshold separation value.

### Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

In particular, although Figure 5 respectively depict steps performed in a particular order for purposes of illustration and discussion, the methods of the present disclosure are not limited to the particularly illustrated order or arrangement. The various steps of the methods 5 can be omitted, rearranged, combined, and/or adapted in various ways within the scope of the appended claims.

## Claims

1. A computer-implemented method comprising:
receiving, by one or more processors (132) of a server computing system (130), from a plurality of users (302, 304, 306, 308) in a joint positional tracking session traveling towards a common destination, positional data associated with a first user (302) and a plurality of other users (304), the plurality of users comprising the first user and the plurality of other users;
determining, by the one or more processors and based on the received positional data associated with the first user and the plurality of other users, that a separation parameter associated with the first user has exceeded a threshold separation value, the separation parameter associated with the first user representing a separation between the first user and another user of the plurality of other users;
automatically generating, by the one or more processors in response to determining that the separation parameter has exceeded the threshold separation value, route updates for reducing the separation parameter between the first user and the other user in the joint positional tracking session to below the threshold separation value; and
transmitting, by the one or more processors, the route updates to the first user and the other user in the joint positional tracking session, wherein the route updates transmitted to the first user and the other user comprise a regrouping waypoint for the first user and the other user to reconvene;
wherein the separation parameter associated with the first user represents a distance between the received positional data associated with the first user and received positional data associated with the other user, the other user being a closest other user to the first user.

2. A computer-implemented method according to claim 1, the method further comprising;
initiating, by one or more processors, the joint positional tracking session which includes the plurality of users.

3. The computer-implemented method of claim 2, wherein the joint positional tracking session is initiated in response to a request to generate the joint positional tracking session received from a computing device associated with a user.

4. The computer-implemented method of claim 3, wherein the request includes an identifier associated with at least one other user to be invited to the joint positional tracking session.

5. The computer-implemented method of claim 2, further comprising:
periodically receiving, by the one or more processors, positional data associated with one or more users in the joint positional tracking session; and
transmitting, by the one or more processors, the received positional data to one or more users in the joint positional tracking session.

6. The computer-implemented method of claim 1, further comprising transmitting a notification to one or more users in the joint positional tracking session that the separation parameter associated with the first user has exceeded the threshold separation value.

7. The method of claim 1, wherein the route updates include instructions to alter a route at one or more computing devices associated with the plurality of users in the joint positional tracking session to reduce the separation parameter associated with the first user to a value below the threshold separation value.

8. A non-transitory computer-readable medium (134) storing instructions (138) that, when executed by one or more processors (132), cause the one or more processors to perform the method of any preceding claim.

9. A server computing system (130) comprising one or more processors (132) configured to perform the method of any of claims 1-7.

## Patentansprüche

1. Computerimplementiertes Verfahren, umfassend:
Empfangen eines Serverrechensystems (130) durch einen oder mehrere Prozessoren (132),
von einer Vielzahl von Benutzern (302, 304, 306, 308) in einer gemeinsamen Positionsverfolgungssitzung, die sich zu einem gemeinsamen Ziel bewegen, Positionsdaten, die einem ersten Benutzer (302) und einer Vielzahl von anderen Benutzern (304) zugeordnet sind, wobei die Vielzahl von Benutzern den ersten Benutzer und die Vielzahl von anderen Benutzern umfasst;
Bestimmen, dass ein Trennungsparameter, der dem ersten Benutzer zugeordnet ist, einen Schwellentrennungswert überschritten hat, durch den einen oder die mehreren Prozessoren und basierend auf den empfangenen Positionsdaten, die dem ersten Benutzer und der Vielzahl von anderen Benutzern zugeordnet ist, wobei der Trennungsparameter, der dem ersten Benutzer zugeordnet ist, eine Trennung zwischen dem ersten Benutzer und einem anderen Benutzer der Vielzahl von anderen Benutzern darstellt;
automatisches Erzeugen von Routenaktualisierungen zum Verringern des Trennungsparameters zwischen dem ersten Benutzer und dem anderen Benutzer in der gemeinsamen Positionsverfolgungssitzung auf unter den Schwellentrennungswert, durch den einen oder die mehreren Prozessoren als Reaktion auf das Bestimmen, dass der Trennungsparameter den Schwellentrennungswert überschritten hat; und
Übertragen der Routenaktualisierungen durch den einen oder die mehreren Prozessoren an den ersten Benutzer und den anderen Benutzer in der gemeinsamen Positionsverfolgungssitzung, wobei die an den ersten Benutzer und den anderen Benutzer übertragenen Routenaktualisierungen einen Umgruppierungswegpunkt für den ersten Benutzer und den anderen Benutzer zum erneuten Zusammenfinden umfassen;
wobei der Trennparameter, der dem ersten Benutzer zugeordnet ist, eine Entfernung zwischen den empfangenen Positionsdaten, die dem ersten Benutzer zugeordnet sind, und den empfangenen Positionsdaten, die dem anderen Benutzer zugeordnet sind, darstellt, wobei der andere Benutzer ein nächstgelegener anderer Benutzer zu dem ersten Benutzer ist.

2. Computerimplementiertes Verfahren nach Anspruch 1, wobei das Verfahren ferner Folgendes umfasst;
Initiieren der gemeinsamen Positionsverfolgungssitzung, die die Vielzahl von Benutzern beinhaltet, durch einen oder mehrere Prozessoren.

3. Computerimplementiertes Verfahren nach Anspruch 2, wobei die gemeinsame Positionsverfolgungssitzung als Reaktion auf eine Anforderung zum Erzeugen der gemeinsamen Positionsverfolgungssitzung initiiert wird, die von einer Benutzervorrichtung empfangen wird, die einem Benutzer zugeordnet ist.

4. Computerimplementiertes Verfahren nach Anspruch 3, wobei die Anforderung einen Bezeichner beinhaltet, der mindestens einem anderen Benutzer zugeordnet ist, der zu der gemeinsamen Positionsverfolgungssitzung eingeladen werden soll.

5. Computerimplementiertes Verfahren nach Anspruch 2, ferner umfassend:
periodisches Empfangen von Positionsdaten, die einem oder mehreren Benutzern in der gemeinsamen Positionsverfolgungssitzung zugeordnet sind, durch den einen oder die mehreren Prozessoren; und
Übertragen der empfangenen Positionsdaten durch den einen oder die mehreren Prozessoren an einen oder mehrere Benutzer in der gemeinsamen Positionsverfolgungssitzung.

6. Computerimplementiertes Verfahren nach Anspruch 1, ferner umfassend das Übertragen einer Benachrichtigung an einen oder mehrere Benutzer in der gemeinsamen Positionsverfolgungssitzung, dass der dem ersten Benutzer zugeordnete Trennungsparameter den Schwellentrennungswert überschritten hat.

7. Verfahren nach Anspruch 1, wobei die Routenaktualisierungen eine Anweisung zum Ändern einer Route an einer oder mehreren Rechenvorrichtungen beinhalten, die der Vielzahl von Benutzern in der gemeinsamen Positionsverfolgungssitzung zugeordnet sind, um den dem ersten Benutzer zugeordneten Trennungsparameter auf einen Wert unterhalb des Schwellentrennungswertes zu verringern.

8. Nichttransitorisches computerlesbares Medium (134), das Anweisungen (138) speichert, die, wenn sie von einem oder mehreren Prozessoren (132) ausgeführt werden, den einen oder die mehreren Prozessoren veranlassen, das Verfahren nach einem der vorhergehenden Ansprüche durchzuführen.

9. Serverrechensystem (130), umfassend einen oder mehrere Prozessoren (132), die dazu konfiguriert sind, das Verfahren nach einem der Ansprüche 1-7 durchzuführen.

## Revendications

1. Procédé mis en œuvre par ordinateur comprenant :
la réception, par un ou plusieurs processeurs (132)d'un système informatique serveur (130), à partir d'une pluralité d'utilisateurs (302, 304, 306, 308) dans une session de suivi de position conjointe se déplaçant vers une destination commune, des données de position associées à un premier utilisateur (302) et à une pluralité d'autres utilisateurs (304), la pluralité d'utilisateurs comprenant le premier utilisateur et la pluralité d'autres utilisateurs ;
la détermination, par les un ou plusieurs processeurs et sur la base des données de position reçues associées au premier utilisateur et à la pluralité d'autres utilisateurs, selon laquelle un paramètre de séparation associé au premier utilisateur a dépassé une valeur de séparation seuil, le paramètre de séparation associé au premier utilisateur représentant une séparation entre le premier utilisateur et un autre utilisateur de la pluralité d'autres utilisateurs ;
la génération automatique, par les un ou plusieurs processeurs en réponse à la détermination selon laquelle le paramètre de séparation a dépassé la valeur de séparation seuil, de mises à jour d'itinéraire pour réduire le paramètre de séparation entre le premier utilisateur et l'autre utilisateur dans la session de suivi de position conjointe en dessous de la valeur de séparation seuil ; et
la transmission, par les un ou plusieurs processeurs, des mises à jour d'itinéraire au premier utilisateur et à l'autre utilisateur dans la session de suivi de position conjointe, dans lequel les mises à jour d'itinéraire transmises au premier utilisateur et à l'autre utilisateur comprennent un point de cheminement de regroupement pour que le premier utilisateur et l'autre utilisateur se réunissent ;
dans lequel le paramètre de séparation associé au premier utilisateur représente une distance entre les données de position reçues associées au premier utilisateur et les données de position reçues associées à l'autre utilisateur, l'autre utilisateur étant l'autre utilisateur le plus proche du premier utilisateur.

2. Procédé mis en œuvre par ordinateur selon la revendication 1, le procédé comprenant également :
l'initiation, par un ou plusieurs processeurs, de la session de suivi de position conjointe qui comporte la pluralité d'utilisateurs.

3. Procédé mis en œuvre par ordinateur selon la revendication 2, dans lequel la session de suivi de position conjointe est initiée en réponse à une demande de génération de la session de suivi de position conjointe reçue d'un dispositif informatique associé à un utilisateur.

4. Procédé mis en œuvre par ordinateur selon la revendication 3, dans lequel la demande comporte un identifiant associé à au moins un autre utilisateur à inviter à la session de suivi de position conjointe.

5. Procédé mis en œuvre par ordinateur selon la revendication 2, comprenant également :
la réception périodique, par les un ou plusieurs processeurs, des données de position associées à un ou plusieurs utilisateurs dans la session de suivi de position conjointe ; et
la transmission, par les un ou plusieurs processeurs, des données de position reçues à un ou plusieurs utilisateurs dans la session de suivi de position conjointe.

6. Procédé mis en œuvre par ordinateur selon la revendication 1, comprenant également la transmission d'une notification à un ou plusieurs utilisateurs dans la session de suivi de position conjointe indiquant que le paramètre de séparation associé au premier utilisateur a dépassé la valeur de séparation seuil.

7. Procédé selon la revendication 1, dans lequel les mises à jour d'itinéraire comportent des instructions pour modifier un itinéraire au niveau d'un ou de plusieurs dispositifs informatiques associés à la pluralité d'utilisateurs dans la session de suivi de position conjointe pour réduire le paramètre de séparation associé au premier utilisateur à une valeur inférieure à la valeur de séparation seuil.

8. Support non transitoire lisible par ordinateur (134) stockant des instructions (138) qui, lorsqu'elles sont exécutées par un ou plusieurs processeurs (132), amènent les un ou plusieurs processeurs à exécuter le procédé selon une quelconque revendication précédente.

9. Système informatique serveur (130) comprenant un ou plusieurs processeurs (132) configurés pour exécuter le procédé selon l'une quelconque des revendications 1 à 7.
